# EUROPEAN PATENT SPECIFICATION

(11) **EP 1 611 008 B1**
(45) Date of publication and mention of the grant of the patent: **26.03.2008**
(21) Application number: 04725705.0
(22) Date of filing: 05.04.2004
(51) Int. Cl.: B64D 10/00

(54) **EMERGENY EQUIPMENT AND STORAGE DEVICE THEREFOR**
NOTAUSRÜSTUNG UND VORRICHTUNG ZU IHRER AUFNAHME
EQUIPEMENT DE SECOURS ET SON DISPOSITIF DE STOCKAGE

(30) Priority: 10.04.2003 FR 0304504
(43) Date of publication of application: 04.01.2006
(73) Proprietor: INTERTECHNIQUE, 78373 Plaisir Cedex (FR)
(72) Inventor: BARDEL, Michel, F-78310 Maurepas (FR); GUINOT, Bernard, Jean, F-78000 Versailles (FR); FARIN, Eric, F-94120 Fontenay sous Bois (FR)
(74) Representative: Bérogin, Francis
(86) International application number: PCT/EP2004/004262
(87) International publication number: WO 2004/089472

(56) References cited:
- WO-A-90/02582
- US-A- 5 318 250
- US-A1- 2002 189 617
- US-A1- 2003 030 911

## Description

The present invention relates to storage devices for emergency equipment for aircraft flight crew. This type of emergency equipment is designed to be held on the head of a user. It is generally constituted by a face mask, goggles to provide protection against smoke, and/or a device for displaying information.

More particularly, the invention relates to a storage device for emergency equipment of the above-specified type, the storage device being adapted so that when the emergency equipment is in its stored position on or in the storage device, the user can take hold of the emergency equipment via at least one grip surface, using one hand to place the emergency equipment on the head in an in-use position, while keeping said hand in substantially the same position on the grip surface. Access to the grip surface may optionally require the storage device to be opened, e.g. by initially releasing a protection and/or closure element.

Storage devices in the form of a box or a stand are already known for emergency equipment such as masks and protective goggles. See for example WO 90/02582, which shows all the features of the preamble of the independent claim.

Such storage devices are important for protecting the emergency equipment they contain and they satisfy the need for having a location for storing emergency equipment in a predefined position so as to ensure that the flight crew does not waste time searching for the equipment when they need it in a hurry.

However, under certain conditions, it can arise that the flight crew desires or requires information that is not or that is no longer visible on the control panel, or that is difficult of access. This applies in particular when smoke fills the cockpit, flight crew members then needs to view quickly the information they require.

An object of the invention is to satisfy this need of flight crew members.

To this end, the invention as defined by claim 1, provides a combination of an emergency equipment for members of aircraft flight crew and a storage device for receiving the emergency equipment which is designed to be held on a user's head, the storage device being adapted so that when the emergency equipment is in a stored position on or in the storage device, the user can take hold of the emergency equipment via at least one grip surface to place the emergency equipment on the user's head in an in-use position, the combination being characterized by the fact that the emergency equipment comprises at least one information display device which is adapted to be held close to an eye of the user and to project a light signal bearing information onto the retina of said eye, while the emergency equipment is in the in- use position and said storage device includes a test device which, when activated while the emergency equipment is in the storage position, causes a test light signal to be emitted by the display device, which signal is visible to the user and enables the user to verify that the display device is operational.

By means of these dispositions, a member of the flight crew has reliable, quick, and ergonomic access to a device enabling information to be viewed. The invention thus makes it easier to equip flight crew members with respective emergency information viewer devices.
· the device includes a test device which, when activated while the emergency equipment is in the storage position, causes a test light signal to be emitted by the display device, which signal is visible to the user and enables the user to verify that the display device is operational, without it being necessary to remove the display device from its storage position and location; this disposition makes it possible not only to save time during maintenance, but also to ensure that the display device is not damaged by being wrongly handled while it is put back into the storage device, which would make the test operation pointless;
· the test device may include control means for triggering emission of the test light signal by the display device and transmission means for propagating the test light signal from the display device to a display unit that is visible to the user and that enables the user to verify that the display device is operational while the emergency equipment is in the storage position;
· the device may include a button acting as control means for causing the light signal to be emitted by the display device;
· the device may include a light guide adapted to transmit the light signal, from the display device to the display unit;
· the emergency equipment may be constituted solely by a display device adapted to be removably mounted on a face mask or on protective goggles, or placed directly on the head of a user;
· the emergency equipment may be constituted by a face mask and the display device;
· the device may include a box, itself comprising:
   · a frame defining a front face of a receptacle for the emergency equipment, the emergency equipment being inserted or extracted into or from the receptacle via said front face; and
   · at least one flap closing said front face at least in part when the emergency equipment is placed in the receptacle, and including at least one notch via which at least a portion of the grip surface projects from an outside face of the flap, i.e. out from the box, and an opening through which a light signal can appear such as a test light signal emitted by the display device;
· the device may comprise a stand adapted to receive protective goggles and a display device releasably and independently of each other; and
· the device may comprise a bag adapted to receive emergency equipment.

Other aspects, objects, and advantages of the invention appear on reading the following description of various embodiments.

The invention will be better understood with the help of the drawings, in which:
· Figure 1 is a diagrammatic perspective view of a first embodiment of the invention, corresponding to a stand for the display device;
· Figure 2 is a perspective diagram of a second embodiment of the invention, corresponding to a stand for protective goggles fitted with a display device;
· Figure 3 is a partially cutaway diagrammatic perspective view of a third embodiment of the invention, corresponding to a storage box for a face mask fitted with protective goggles and with a display device;
· Figure 4 is a diagrammatic perspective view of a variant of the Figure 3 face mask;
· Figure 5 is a diagrammatic perspective view of a face mask fitted with a protective device;
· Figure 6 is a diagrammatic view analogous to that of Figure 3, showing a fourth embodiment of the storage device of the invention corresponding to a storage box for a face mask fitted with a display device, as shown in Figure 5;
· Figure 7 is a diagrammatic front view of a fifth embodiment of the storage device of the invention, corresponding to a storage bag for a breathing device fitted with protective goggles and with a display device, the storage device being shown closed; and
· Figure 8 is a diagrammatic side view of the storage device of Figure 7, shown open.

In the figures, the same references are used to designate elements that are identical or similar.

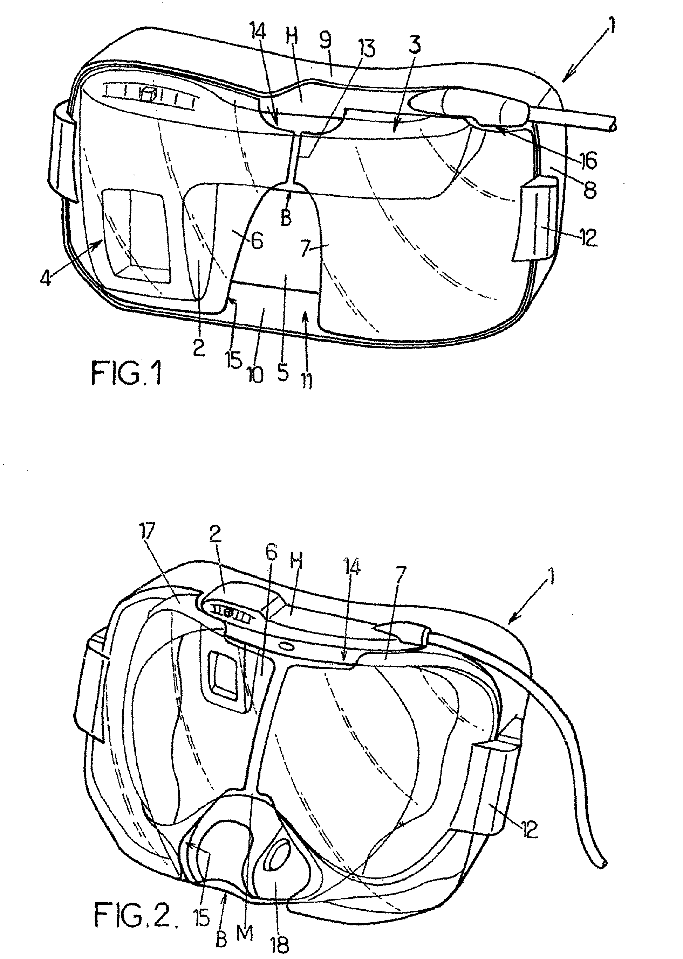

In a first embodiment, shown in Figure 1, the storage device of the invention is a stand box 1 for a display device 2.

By way of example, the display device 2 is of the type sold by the supplier Microvision Inc., based in Bothell in the state of Washington, USA. The display device comprises a body 3 adapted to be positioned on a user's forehead when in use, being held in said position by elastic means (not shown). The display device 2 also has optical transmission means 4 adapted to transmit an light signal and reflect it on the retina of the user when the display device is in its in-use position.

The stand box 1 comprises a back wall 5 and two doors 6 and 7. In variants, the stand box 1 could have a larger number of doors, for example it could have four doors disposed symmetrically relative to the diagonals, etc. The doors 6, 7, when considered from outside the stand box 1 and with the doors 6, 7 closed, are substantially convex. The doors 6, 7 are transparent, thus making it possible to verify that the display device 2 is present in the stand box 1.

The back wall 5 is substantially rectangular in shape, having two side walls 8, a top wall 9, and a bottom wall 10 projecting therefrom. These four walls extend substantially perpendicularly from the back wall 5 of the box, and define a substantially rectangular open face 11.

The back wall 5 rests on two projections pierced by holes suitable for fixing the stand box 1 to a support such as a partition in a cockpit, and within reach of a member of the flight crew.

Each side wall 8 is provided with a hinge 12. Each hinge 12 supports a respective door 6 or 7, enabling the door to be opened and closed about an axis that is substantially parallel to one of the short sides of the open face 11. The doors 6, 7 are hinged to the back wall 5 to move between at least two extreme positions: a closed position in which the doors 6, 7 cover at least in part the display device 2, and an open position in which the doors 6, 7 are moved apart from each other so as to allow the display device 2 to be extracted from the stand box 1.

The hinges 12 are bistable. They have a first stable position corresponding to the position in which the doors 6, 7 are closed. In this position, the hinges 12 are adapted to hold the display device 2 with sufficient force in the box 1, between its back wall 5 and the doors 6, 7, even if the device is not pressed against the back wall 5. The hinges 12 have a second stable position corresponding to the doors 6, 7 being in the open position. This second stable position is adapted to prevent the doors 6, 7 from closing accidentally. In this way, the user can return the display device 2 into the stand box 1 with one hand since the doors 6, 7 are open.

Each door 6 or 7 has a closure edge 13 including an upper notch 14 and a lower notch 15.

The upper notch 14 of a door 6 together with the upper notch of the other door 7 serves to enable a first finger to be positioned at a location H on one edge of the display device 2. The lower notch 15 of a door 6 together with the lower notch of the other door 7 with which it co-operates to form a substantially triangular cutout enables a second finger to be positioned at a location B on another edge of the display device 2. A user can thus take hold of the display device 2 by pinching grip surfaces between two fingers at locations B and H and extract the display device 2 from the stand box 1, using one hand only. Since the convex shape of the doors 6 and 7 does not impede such extraction, there is no need for them to be opened beforehand.

While holding the display device 2 pinched in one hand, the user can, without releasing the display device 2, use the other hand to pass the elastic means around the user's head.

A cutout 16 is provided in one of the doors 6, 7 so as to pass a cable for connecting the display device 2 to a video system (not shown). In a variant, the display device operates without being connected to a video system. Under such circumstances, there is no need to provide a cutout 16.

In a variant, the display device 2 is designed to be secured to goggles for providing protection against smoke and/or to a face mask (i.e. a breathing mask covering the mouth and the nose) and/or to a so-called "full-face" mask. Under such circumstances, it is not provided with elastic means, but with means for fastening it to the goggles or to the face mask.

In a second embodiment, shown in Figure 2, the storage device of the invention is a stand box 1 for protective goggles 17 provided with a display device 2. The display device 2 may be analogous to that described above (apart from the elastic means). In addition, the display device 2 may be mounted in fixed or releasable manner on the protective goggles 17.

The stand box 1 in this embodiment is of substantially the same shape and has substantially the same structure as that described for the first embodiment. The shapes of the upper and lower notches 14 and 15 are adapted to the shape of the protective goggles 17. More precisely, the lower notches 15 leave grip surfaces available that are disposed on locking means 18 for securing the protective goggles 17 to a face mask. Thus, the user can take hold of the protective goggles 17, either by pinching the locking means 18 or by pinching the protective goggles 17 between high and low points H and B.

In a variant, the protective goggles 17 are protective goggles that have no locking means, being held on a user's head by elastic means (not shown). Under such circumstances, the user takes hold of the protective goggles 17 so as to extract them from the stand box 1 between two fingers located substantially at point H on the top of the protective goggles 17 and at a saddle-shaped point M of the protective goggles 17 for placing on the bridge of the nose when the protective goggles 17 are in the in-use position.

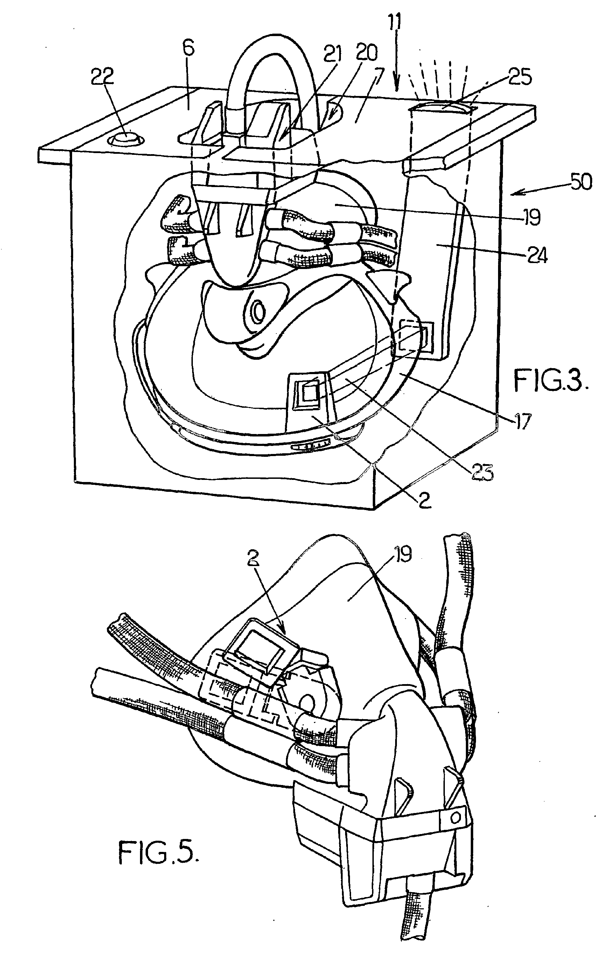

In a third embodiment, shown in Figure 3, the storage device of the invention is a storage box 50 for emergency equipment constituted by a face mask 19, protective goggles 17, and a display device 2. The storage box 50 comprises a frame defining an open front face 11 of a receptacle for the emergency equipment, the emergency equipment being inserted or extracted into or from the receptacle through said front face 11.

The storage box 50 is provided with two doors 6 and 7, each door 6, 7 having a notch 20 coinciding with the notch in the other door. These notches 20 enable grip surfaces 21 of the face mask 19 to project outside the storage box 50.

The display device 2 of the emergency equipment stored in the storage box 50 is already connected. It can be switched on by contact being made when the doors 6, 7 are opened. A test button 22 may also be placed on the outside face of one of the doors 6, 7 (in this case the door 6). The test button 22 enables the display device 2 to be switched on temporarily. A light signal 23 is then emitted by the display device 2. This light signal 23 illuminates a light guide 24. The light guide 24 transmits at least a fraction of the light generated by the display device 2 to an end forming a display unit 25. This display unit 25 is flush with one of the doors 6, 7 (in this case the door 7) via an opening made therein. Thus, without extracting the emergency equipment from the storage box 50, the user can test that the display device 2 is operational.

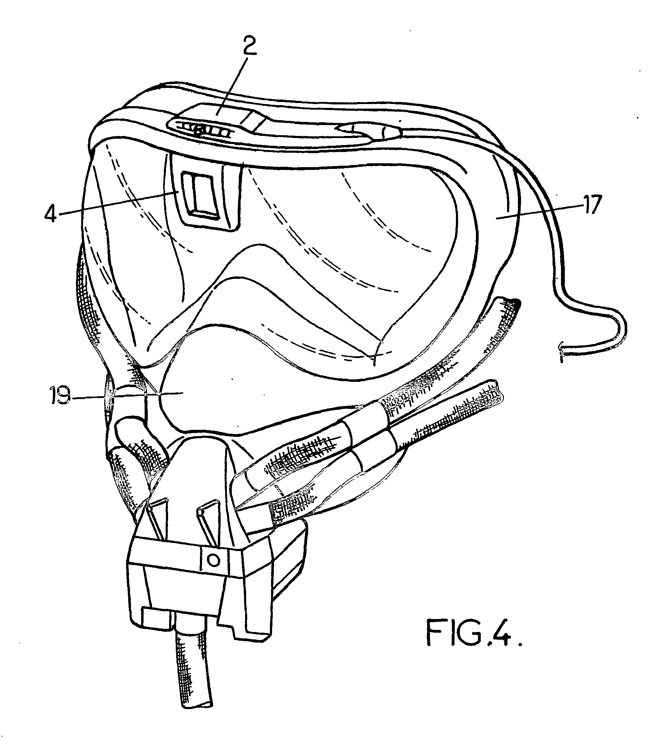

In a variant, the storage box 50 is adapted to receive an emergency device constituted by a so-called "full-face" mask as shown in Figure 4 and constituted by a face mask 19 and protective goggles 17 connected to each other in permanent manner. A display device 2 is placed on the protective goggles 17 and it may be attached thereto in temporary or permanent manner. In the variant shown in Figure 4, the display device 2 has optical transmission means 4 disposed inside the protective goggles 17 while they are in place on the face of a user. In a variant that is not shown, the display device 2 may be secured to the protective goggles 17 so that the optical transmission means 4 are outside the protective goggles 17 when they are in place on the face of the user.

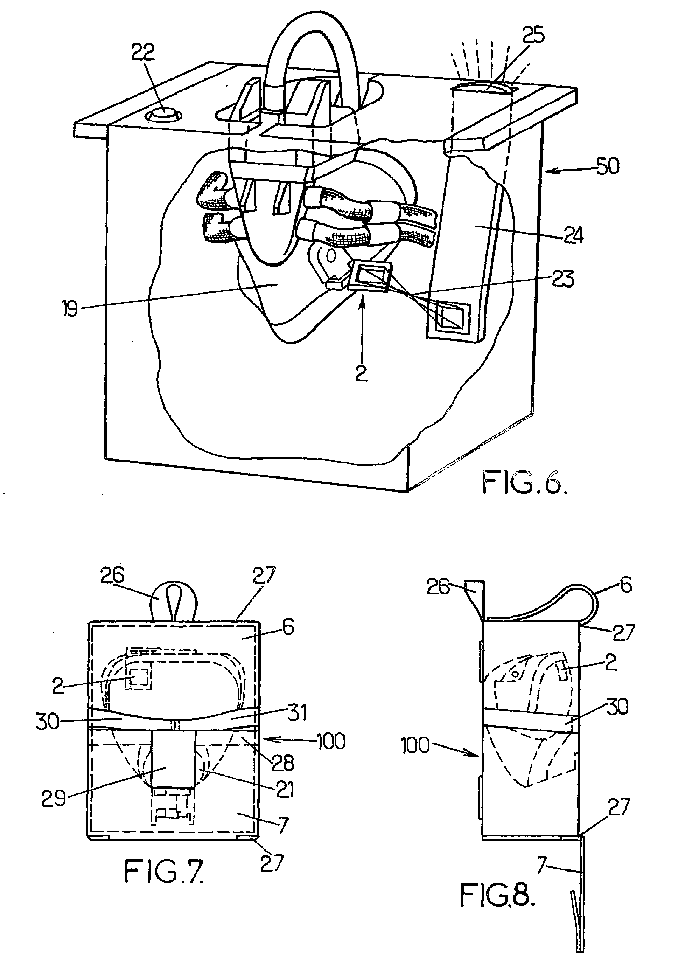

In a fourth embodiment, shown in Figures 5 and 6, the storage device of the invention is a storage box 50 for emergency equipment constituted by a face mask 19 and by a display device 2.

As shown in Figure 5, the face mask 19 is of a known type (see for example document EP 0 288 391). This face mask 19 has the display device 2 mounted thereon in stationary and/or removable and/or hinged manner.

As shown in Figure 6, in the fourth embodiment, the storage box 50 is substantially analogous to that described with reference to the third embodiment. As described above, it is provided with transmission means such as a light guide 24 for propagating an optical test signal 23 and control means such as a test button 22 for causing the light signal 23 to be emitted.

In a variant (not shown), the storage device of the invention is adapted to receive a face mask 19 with or without protective goggles 17, having the display device 2 mounted thereon. When the display device 2 is in its storage position in the storage device, it occupies a fixed retracted position, e.g. against the outside face of the face mask 19. Under such circumstances, the means 23 for transmitting the test light signal can be disposed differently from that shown in Figures 3 and 6. For example, a light guide may be placed on a side wall facing the display device (i.e. on a wall of the box 50 perpendicular to the wall on which the light guide 24 is located in Figures 3 and 6).

In another variant (not shown), the storage device of the invention is adapted to receive a so-called "full-face" mask as shown in Figure 4, but including a display device 2 mounted not on the protective goggles 17, but on the face mask 19, as shown in Figure 5.

In yet another variant, the cable connecting the display device 2 to a video system is integrated in the protective goggles 17 and/or in the face mask 19, and is then secured to pipes for feeding the face mask 19 with breathing gas.

In a fifth embodiment, shown in Figures 7 and 8, the storage device of the invention is a flexible box or bag 100. The bag 100 is substantially in the form of a rectangular parallelepiped with a loop 26 for enabling it to be hung in a substantially vertical position. The front face 11 of the bag 100 is closed by a bottom door 7 and a top door 6. By way of example, the doors 6 and 7 are made of fabric. The doors 6 and 7 open and close by folding about folds 27 that extend substantially horizontally when the bag 100 is suspended via the loop 26. Each door 6 or 7 covers substantially half of the front face 11. The doors overlap in a zone where they are connected together by Velcro® type fasteners 28. A handle 29 connected to the bottom door 7 close to a fastener 28 serves, when pulled, to separate the doors 6 and 7 from each other so as to open the bag 100. Two strips 30 and 31 each fixed to a respective side wall of the bag 100 have their free ends connected together by fixing means, e.g. of the Velcro® type, so as to retain the emergency device constituted in this case by a face mask 19 fitted with protective goggles 17 and a display device 2, when the lower door 7 is hanging down, leaving uncovered the bottom half of the bag 100 (see Figure 8). Grip surfaces 21 of the face mask 19 are then visible and accessible, projecting under the bottom door 6. The user can thus take hold of these grip surfaces 21, pull on the emergency device as a whole, and extract it from the bag 100. While this movement is taking place, the strips 30 and 31 separate, thereby releasing the emergency device which the user can then don on the head.

## Claims

1. A combination of an emergency equipment (2, 17, 19) for members of aircraft flight crew and a storage device (1, 50, 100) for receiving the emergency equipment (2, 17, 19) which is designed to be held on a user's head, the storage device (1, 50, 100) being adapted so that when the emergency equipment (2, 17, 19) is in a stored position on or in the storage device (1, 50, 100), the user can take hold of the emergency equipment (2,17, 19) via at least one grip surface (21) to place the emergency equipment (2, 17, 19) on the user's head in an in-use position, the combination being **characterized by** the fact that the emergency equipment (2, 17, 19) comprises at least one information display device (2) which is adapted to be held close to an eye of the user and to project a light signal bearing information onto the retina of said eye, while the emergency equipment (2, 17, 19) is in the in-use position and said storage device (1, 50, 100) includes a test device (22, 24, 25) which, when activated while the emergency equipment (2, 17, 19) is in the storage position, causes a test light signal (23) to be emitted by the display device (2), which signal is visible to the user and enables the user to verify that the display device (2) is operational.

2. The combination according to claim 1, in which the test device (22,24, 25) includes control means (22) for triggering emission of the test light signal (23) by the display device (2) and transmission means (24) for propagating the test light signal (23) from the display device (2) to a display unit (25) that is mounted on the storage device (1, 50, 100) and is visible to the user and that enables the user to verify that the display device (2) is operational while the emergency equipment (2, 17, 19) is in the storage position.

3. The combination according to claim 2, wherein the transmission means is a light guide (24) adapted to transmit the light signal (23), from the display device (2) to the display unit (25).

4. The combination according to claim 2 or claim 3, wherein the control means is a button (22) acting for causing the light signal (23) to be emitted by the display device (2).

5. The combination according to any preceding claim, in which the emergency equipment is constituted solely by a display device (2) adapted to be removably mounted on a face mask (19) or on protective goggles (17), or placed directly on the head of a user.

6. The combination according to any one of claims 1 to 4, in which the emergency equipment is constituted by a face mask (19) and the display device (2).

7. The combination according to any one of claims 1 to 4, in which the emergency equipment is constituted by a face mask (19), protective goggles (17), and the display device (2).

8. The combination according to any preceding claim, in which the storage device comprises a box (50) itself comprising:
- a frame defining a front face (11) of a receptacle for the emergency equipment (2,17, 19), the emergency equipment (2,17, 19) being inserted into or extracted from the receptacle via said front face; and
- at least one flap (6,7) closing said front face (11) at least in part when the emergency equipment (2, 17,19) is placed in the receptacle, and including at least one notch (20) via which at least a portion of the grip surface (21) projects from an outside face of the flap (6,7) and out from the box (50), and an opening through which a test light signal (23) emitted by the display device (2) can appear.

9. The combination according to any one of claims 1 to 7, in which the storage device comprises a stand (1) adapted to receive protective goggles (17) and a display device (2) releasably and independently of each other.

10. The combination according to any one of claim 1 to 7 in which the storage device comprises a bag (100) adapted to receive the emergency equipment (2, 17, 19).

## Patentansprüche

1. Kombination einer Notausrüstung (2, 17, 19) für Mitglieder einer Luftfahrzeugbesatzung und einer Aufbewahrungsvorrichtung (1, 50, 100) zum Aufnehmen der Notausrüstung (2, 17, 19), welche so ausgestaltet ist, dass sie am Kopf eines Benutzers gehalten werden soll, wobei die Aufbewahrungsvorrichtung (1, 50, 100) derart ausgelegt ist, dass dann, wenn sich die Notausrüstung (2, 17, 19) in einer Aufbewahrungsstellung an oder in der Aufbewahrungsvorrichtung (1, 50, 100) befindet, der Benutzer die Notausrüstung (2, 17, 19) über zumindest eine Griffoberfläche (21) nehmen kann, um die Notausrüstung (2, 17, 19) an dem Kopf des Benutzers in einer Gebrauchsstellung zu platzieren, wobei die Kombination durch die Tatsache gekennzeichnet ist, dass die Notausrüstung (2, 17, 19) zumindest eine Informationsanzeigevorrichtung (2) aufweist, die dazu ausgelegt ist, nahe einem Auge des Benutzers gehalten zu werden und eine Lichtsignaltrageinformation auf die Netzhaut des Auges zu projizieren, während sich die Notausrüstung (2, 17, 19) in der Gebrauchsstellung befindet, und die Aufbewahrungsvorrichtung (1, 50, 100) eine Prüfvorrichtung (22, 24, 25) enthält, die, wenn sie aktiviert ist, während sich die Notausrüstung (2, 17, 19) in der Aufbewahrungsstellung befindet, bewirkt, dass von der Anzeigevorrichtung (2) ein Prüflichtsignal (23) ausgegeben wird, welches Signal für den Benutzer sichtbar ist und den Benutzer in die Lage versetzt, zu verifizieren, dass die Anzeigevorrichtung (2) betriebsfähig ist.

2. Kombination nach Anspruch 1, worin die Prüfvorrichtung (22, 24, 25) ein Steuermittel (22) enthält, um die Abgabe des Prüflichtsignals (23) durch die Anzeigevorrichtung (2) auszulösen, sowie ein Übertragungsmittel (24) zum Übertragen des Prüflichtsignals (23) von der Anzeigevorrichtung (2) zu einer Anzeigeeinheit (25), die an der Aufbewahrungsvorrichtung (1, 50, 100) angebracht ist und für den Benutzer sichtbar ist und die den Benutzer in die Lage versetzt, zu verifizieren, dass die Anzeigevorrichtung (2) betriebsfähig ist, während sich die Notausrüstung (2, 17, 19) in der Aufbewahrungsstellung befindet.

3. Kombination nach Anspruch 2, worin das Übertragungsmittel ein Lichtleiter (24) aufweist, der dazu ausgelegt ist, das Lichtsignal (23) von der Anzeigevorrichtung (2) zu der Anzeigeeinheit (25) zu übertragen.

4. Kombination nach Anspruch 2 oder Anspruch 3, worin das Steuermittel ein Knopf (22) ist, der die Wirkung hat, zu veranlassen, dass das Lichtsignal (23) von der Anzeigevorrichtung (2) abgegeben wird.

5. Kombination nach einem vorhergehenden Anspruch, worin die Notausrüstung allein durch eine Anzeigevorrichtung (2) aufgebaut ist, die dazu ausgelegt ist, abnehmbar an einer Gesichtsmaske (19) oder einer Schutzbrille (17) oder direkt am Kopf eines Benutzers angeordnet zu werden.

6. Kombination nach einem der Ansprüche 1 bis 4, worin die Notausrüstung durch eine Gesichtsmaske (19) und die Anzeigevorrichtung (2) aufgebaut ist.

7. Kombination nach einem der Ansprüche 1 bis 4, worin die Notausrüstung durch eine Gesichtsmaske (19), eine Schutzbrille (17) und die Anzeigevorrichtung (2) aufgebaut ist.

8. Kombination nach einem vorhergehenden Anspruch, worin die Aufbewahrungsvorrichtung einen Kasten (50) aufweist, welcher selbst aufweist:
- einen Rahmen, der eine Vorderseite (11) einer Aufnahme für die Notausrüstung (2, 17, 19) definiert, wobei die Notausrüstung (2, 17, 19) über die Vorderseite in die Aufnahme eingesetzt oder daraus entnommen wird; und
- zumindest eine Klappe (6, 7), die die Vorderseite (11) zumindest teilweise schließt, wenn die Notausrüstung (2, 17, 19) in der Aufnahme angeordnet ist, und die zumindest eine Vertiefung (20) enthält, über die zumindest ein Teil der Griffoberfläche (21) von einer Außenseite der Klappe (6, 7) und aus dem Kasten (50) vorsteht, sowie eine Öffnung, durch die ein von der Anzeigevorrichtung (2) abgegebenes Prüflichtsignal (23) sichtbar wird.

9. Kombination nach einem der Ansprüche 1 bis 7, worin die Aufbewahrungsvorrichtung einen Ständer (1) aufweist, der dazu ausgelegt ist, eine Schutzbrille (17) und eine Anzeigevorrichtung (2) lösbar und unabhängig voneinander aufzunehmen.

10. Kombination nach einem der Ansprüche 1 bis 7, worin die Aufbewahrungsvorrichtung eine Tasche (100) aufweist, die dazu ausgelegt ist, die Notausrüstung (2, 17, 19) aufzunehmen.

## Revendications

1. Combinaison d'un équipement de secours (2, 17, 19) pour personnels navigants d'aéronefs, et d'un dispositif de rangement (1, 50, 100) pour recevoir l'équipement de secours (2,17,19), qui est destiné à être maintenu sur la tête d'un utilisateur, le dispositif de rangement (1, 50, 100) étant adapté pour que, lorsque l'équipement de secours (2, 17, 19) est dans une position de rangement sur ou dans le dispositif de rangement (1, 50, 100), l'utilisateur puisse saisir l'équipement de secours (2,17,19) par au moins une surface de préhension (21), pour placer l'équipement de secours sur sa tête, dans une position d'utilisation, la combinaison étant **caractérisée par le fait que** l'équipement de secours (2, 17, 19) comprend au moins un dispositif de visualisation (2) d'informations, qui est adapté pour être maintenu à proximité d'un oeil de l'utilisateur et pour projeter un signal optique porteur des informations sur la rétine dudit oeil, lorsque l'équipement de secours est en position d'utilisation, et ledit dispositif de rangement (1, 50, 100) comporte un dispositif de test (22,24,25) qui, lorsqu'il est activé et que l'équipement de secours (2, 17, 19) est en position de rangement, déclenche l'émission d'un signal optique de test (23) par le dispositif de visualisation (2), lequel signal de test est visible par l'utilisateur et permet à cet utilisateur de vérifier le fonctionnement du dispositif de visualisation (2).

2. Combinaison selon la revendication 1, dans laquelle le dispositif de test (22,24,25) comporte des moyens de commande (22) pour déclencher l'émission du signal optique de test (23) par le dispositif de visualisation (2) et des moyens de transmission (24) pour propager le signal optique de test (23) du dispositif de visualisation (2), à un voyant (25), qui est monté sur le dispositif de rangement (1, 50, 100) et visible par l'utilisateur, et qui permet à l'utilisateur de vérifier le fonctionnement du dispositif de visualisation (2) lorsque l'équipement de secours (2, 17, 19) est en position de rangement.

3. Combinaison selon la revendication 2, dans laquelle les moyens de transmission comportent un guide optique (24) adapté pour transmettre le signal optique (23), du dispositif de visualisation (2) jusqu'au voyant (25).

4. Combinaison selon la revendication 2 ou 3, dans laquelle lesdits moyens de commande sont un bouton (22) servant à déclencher l'émission du signal optique (23) par le dispositif de visualisation (2).

5. Combinaison selon l'une quelconque des revendications précédentes, dans laquelle l'équipement de secours est constitué uniquement d'un dispositif de visualisation (2) adapté pour être monté de manière amovible sur un masque respiratoire (19) ou sur des lunettes de protection (17) ou disposé directement sur la tête de l'utilisateur.

6. Combinaison selon l'une quelconque des revendications 1 à 4, dans laquelle l'équipement de secours est constitué d'un masque respiratoire (19) et du dispositif de visualisation (2).

7. Combinaison selon l'une quelconque des revendications 1 à 4, dans laquelle l'équipement de secours est constitué d'un masque respiratoire (19), de lunettes de protection (17) et du dispositif de visualisation (2).

8. Combinaison selon l'une quelconque des revendications précédentes, dans laquelle le dispositif de rangement comprend une boîte (50) comprenant elle-même :
- un châssis définissant une face avant (11) d'un réceptacle pour l'équipement de secours (2,17,19), l'équipement de secours (2,17,19) étant introduit dans ou extrait du réceptacle par ladite face avant, et
- au moins un volet (6,7) obturant au moins partiellement ladite face avant (11) lorsque l'équipement de secours (2,17,19) est placé dans le réceptacle, et comportant au moins une échancrure (20) par laquelle au moins une partie de la surface de préhension (21) vient en saillie sur une face externe du volet (6,7), et vers l'extérieur de la boîte (50), et une ouverture par laquelle un signal optique (23) de test, émis par le dispositif de visualisation (2), peut apparaître.

9. Combinaison selon l'une quelconque des revendications 1 à 7, dans laquelle le dispositif de rangement comprend un présentoir (1) adapté pour recevoir de manière amovible, et indépendamment l'un de l'autre, des lunettes de protection (17) et un dispositif de visualisation (2).

10. Combinaison selon l'une quelconque des revendications 1 à 7, dans laquelle le dispositif de rangement comprend un sac (100) adapté pour recevoir l'équipement de secours (2,17,19).
